# EUROPEAN PATENT APPLICATION

(11) **EP 1 093 989 A1**
(43) Date of publication of application: **25.04.2001**
(21) Application number: 00610110.9
(22) Date of filing: 18.10.2000
(51) Int. Cl.: B62B 5/04

(54) **A brake primarily for transport trolleys**

(30) Priority: 19.10.1999 DK 991499
(71) Applicant: Fabriken Asbro ApS, 6715 Esbjerg N (DK)
(72) Inventor: Magard-Hansen, Jan, 6705 Esbjerg (DK)
(74) Representative: Boesen, Johnny Peder

(57) **Abstract**

The present invention relates to a brake, primarily for internal transport devices provided with wheels, such as a box trolley, a mail container, comprising a top part (2) which is fixedly mountable on the underside of the transport device and a base part (4) which is provided with a brake shoe (6) at the bottom, said top part and said base part being connected via a support device.

The object of the invention is to achieve a parking brake with a sufficient clearance height between brake foot and base, without protruding parts as well as a simple operation, wherein the pedal for braking and for release is the same.

This may be achieved if it is constructed with a first link arm connected with the top part (2), wherein the first link arm (10) is connected with a second link arm (12) which is connected with the base part (4), wherein a pedal arm (26) is provided with means for affecting the first link arm (10) and the second link arm (12) for locking as well as release of the brake.

## Description

The present invention relates to a brake, primarily for internal transport devices provided with wheels, such as a box trolley, a mail container, comprising a top part which is fixedly mountable on the underside of the transport device and a base part which is provided with a brake shoe at the bottom, said top part and said base part being connected via a support device.

It is common to use internal transport and storage devices which are provided with wheels in connection with the transport of goods on trucks or railway carriages. This transport and storage equipment is provided with parking brakes which can be activated when the units are not allowed to move, e.g. during transport. A parking brake is used for this purpose, which is arranged below the bottom of a container or the like, and which may be extended for braking by operating a foot pedal, just as it may be retracted again by a further foot operation. Brakes of this type are known e.g. from the US patent specifications No. US-A-2,712,366 and US-A-3,554,328.

These types of parking brakes require a great clearance height below the bottom of the container trolley, typically of the order of 200 mm or more, since it occupies some space even in the retracted state. An increase in the clearance height below the bottom of the container trolley in order to accommodate the brake causes the cargo volume to be reduced, however. The parking brake must moreover be capable of providing a sufficiently great braking force to ensure that also heavily loaded trolleys can be kept braked.

In another known type of parking brakes, the building height is reduced by the use of a toggle link mechanism, and the brake is operated by pedals for activation. This results in a relatively compact structure of the parking brake, and the requirement with respect to necessary clearance height of the container trolleys may be reduced to a size of the order of about 140 mm. This type of parking brake, however, has the drawback that the pedal arrangement protrudes from the side or the end on the trolley, which makes the pedal arrangement liable to be damaged when the trolley is handled by a pallet lifter or fork-lift truck, just as this puts a limit to how closely the containers can be stacked.

The object of the invention is to provide a parking brake which has the necessary clearance height between brake foot and base in the non-braked state and does not have protruding components which can be damaged by the handling of the trolley. Further, the object is to achieve a simpler operation of the parking brake as well as a lower building height.

This may be achieved with a brake like the one described in the opening paragraph, if it is formed with a first link arm which is connected with the top part by means of a first hinge function, wherein the first link arm is connected with a second link arm by a second hinge function, wherein the second link arm is connected with the base part by a third hinge function, wherein a pedal arm is connected with the second link arm, wherein the pedal arm is constructed to affect a toggle link which consists of the first link arm, the second hinge function and the second link arm, and wherein the brake has means for locking as well as means for releasing the brake.

This provides a parking brake where a sufficient clearance height between brake foot and base is possible, just as the parking brake of the invention has a simple operation, where the pedal that is activated for braking and for release of the brake may be the same pedal, and where the components of the brake do not protrude and thereby cannot be damaged by the handling of the trolley.

The brake may be constructed such that the pedal arm is connected with the second link arm via a fourth hinge function, wherein the pedal arm is formed with means for affecting a toggle link, and wherein the brake has means for locking as well as other means for releasing the brake. This embodiment provides a brake with a pedal arm which may be moved relative to the second link arm without the second link arm being moved at the same time.

The brake may be constructed such that the third hinge function and the fourth hinge function have a common shaft about which the second link arm and the pedal arm may be moved separately. For selected brake types, this feature ensures an optimum position of the pedal arm in connection with the second link arm.

The brake may be constructed such that it is locked by activation of the pedal, whereby the locking means of the pedal arm press against an engagement face on the second link arm and thereby cause the toggle link to assume a locked position. Hereby, simple and effective locking of the brake in the activated state may be achieved.

The brake may be released by activation of the pedal, whereby the release means of the pedal arm activate a release mechanism which is mounted in connection with the second link arm. Release of the brake may hereby be achieved by a simple movement.

The brake may be constructed with a release mechanism which may consist of a release part which, when the brake has been activated and the pedal arm has been returned to the starting position, is moved forwards and thereby positioned in front of the release means of the pedal arm. The brake is hereby ready to be released by activation of the pedal. Further, a double function of the pedal arm is achieved, as the pedal arm can both serve as an activation unit and as a deactivation unit for the brake.

The brake may be constructed so that the first link arm has a contact face which is in immediate connection with the second contact face of the release part when the brake is activated, wherein the release part, upon activation of the pedal arm, is rotated about a shaft and thereby, via a first contact face, cooperates with a contact face on the release means of the pedal arm, thereby releasing the brake. This form of release mechanism results in a preferred simple release of the brake, with a minimum of fixed connections between link arms and release part.

The brake may moreover be constructed such that the base part is connected with a support arm through a fifth hinge function, wherein the support arm is connected with the top part via a sixth hinge function. This provides the option of making a brake with a very low building height.

The brake may also be constructed such that the third and fifth hinge functions are formed with a common shaft about which the hinge functions may be moved separately. This results in a simplification of the connecting links of the brake, as the support arm thus does not need its own connecting point.

The brake may also be constructed such that the pedal arm returns to its starting position after activation. This provides the clear advantage that the pedal always has to be activated in the same direction, no matter whether braking is to be performed or whether the brake is to be released. Another advantage is that the pedal is protected, against collision or the like, below the trolley bottom.

In a preferred embodiment, the brake of the invention may be constructed with a third hinge function which is formed by a roller that establishes a connection between the second link arm and the base part. This solution provides the advantage that in a special variant of the brake of the invention there may be a base part which is resiliently mounted on the top part, and which is activated for braking by a rolling movement when the roller is pressed against the base part in the third hinge function, thereby causing the brake to assume a locked position.

The brake may also be provided with a support arm which may be connected with the second link arm via a fifth hinge function, wherein the support arm may be connected with the top part via a sixth hinge function. This embodiment provides the possibility of making a brake with a base part which is only connected with the second link arm via a contact face between a roller and the base part.

In a special embodiment, the brake may have a connecting rod between the locking means of the pedal arm and the top part of the brake. This provides the optimum advantage that the brake may be formed with a very low building height. The reason is that the connecting rod transfers the forces by which the pedal is activated in such a manner as to allow optimum folding together of the two link arms.

The invention will be explained below with reference to drawings, in which
- Fig. 1: shows a first embodiment of the brake of the invention in a passive position,
- Fig. 2: shows the same embodiment, but in an active position,
- Fig. 3: shows a pedal arm with locking means,
- Fig. 4: shows link arms and a release mechanism,
- Fig. 5: shows a second embodiment of the brake in a passive position, and
- Fig. 6: shows the same brake as in fig. 5, but in an active position.

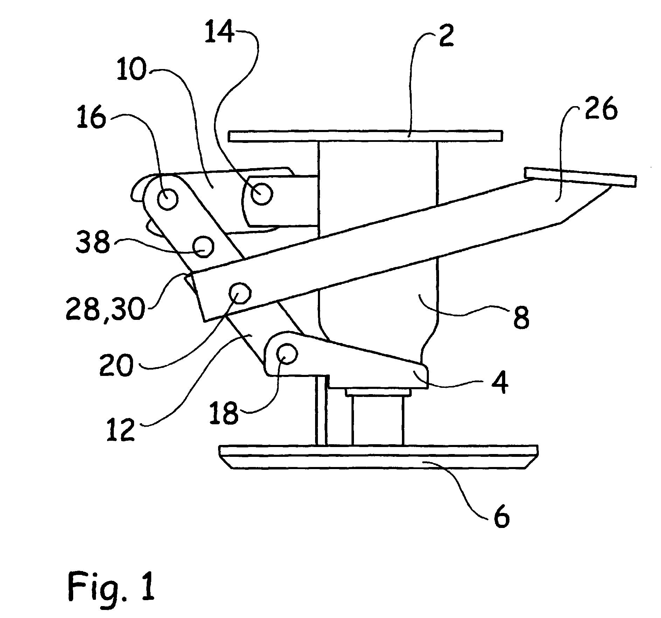

Fig. 1 shows a brake with a top part 2, which is connected with a first link arm 10 via a first hinge function 14. The second hinge function 16 connects the first link arm 10 with the second link arm 12. The second link arm 12 is connected with the base part 4 by a third hinge function 18. The second link arm 12 is connected with a pedal arm 26 by a fourth hinge function 20.

It should be noted here that the fourth hinge function 20, which connects the pedal arm 26 with the second link arm 12, may very well have the same axis of rotation as the third hinge function 18.

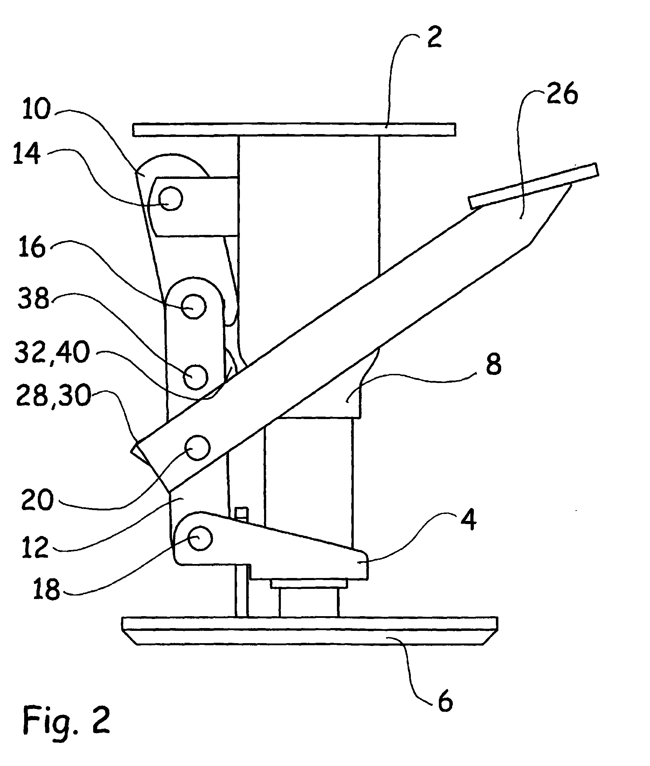

When the pedal arm 26 is activated, the base part 4 is moved down towards the base and the first link arm 10 is caused to be in extension of the second link arm 12 in such a manner that the first 14, second 16 and third hinge functions 18 are aligned and are moved beyond their dead centre, so that the link arms 10, 12 engage the support device 8. When the link arms 10, 12 have assumed this position, the brake is in its active position, which is shown in fig. 2.

As mentioned, fig. 2 shows the brake in its active position. It will moreover be seen that the pedal arm 26 is back in its starting position and is thereby protected optimally.

When the brake is to be released, the pedal arm 26 must be activated again. For the brake to be released by the same movement as the one that causes braking, it is necessary to "turn" the force by which the pedal arm 26 affects the link arms 10, 12. This takes place by means of a release mechanism 32, 38, 40 which is here positioned in connection with the second link arm 12.

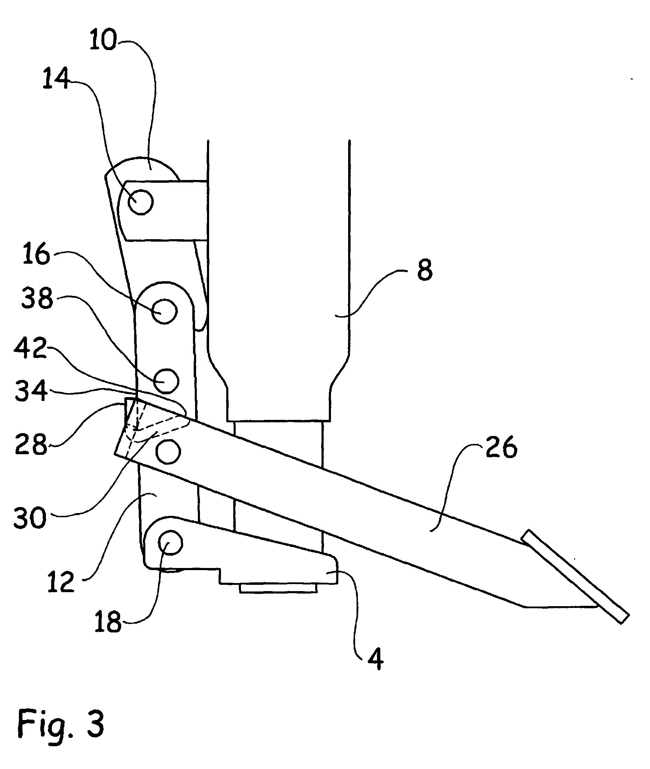

Fig. 3 shows a section where the locking means 28 of the pedal arm can be seen. These locking means 28 operate such that when the pedal arm 26 is affected, the locking means 28 are caused to contact the contact face 34 of the second link arm, following which the lower part 4 with a brake shoe 6 is moved down against the base. At the same time, as a function of the first 14, second 16 and third 18 hinge functions, the first link arm 10 and the second link arm 12 will be caused to be positioned in extension of each other and will finally tilt beyond their dead centre and engage the support device 8. The brake has hereby been moved to its locked position, see fig. 2. Also shown are the release means 30 of the pedal arm, which consist of a projection with a contact face 42 which, upon release of the brake, causes the release part 32 to move about its shaft 38.

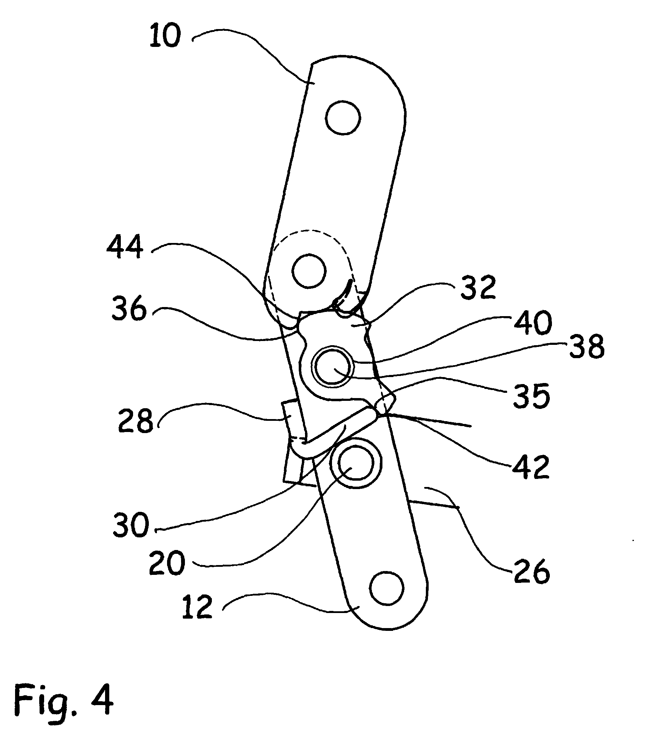

The release mechanism, which consists of a release part 32, a shaft 38 and a spring 40, is shown in fig. 4. The mechanism is here shown in a sectional view where the release part 32 is shown mounted on a shaft 38 between the two side parts of the second link arm 12. There is moreover a spring 40 which ensures that the release part 32 is moved forwards and thereby in position with its contact faces 34, 36 at the opposed contact faces 42, 44 with which it is to cooperate at release. As will also appear from fig. 4, the first link arm 10 is provided with a contact face 44 which is in the immediate vicinity of the contact face 36 of the release part when the brake is activated.

Upon release of the brake, the pedal arm 26 is affected, and as a result of this the release means 30 on the pedal arm 26 via its contact face 42 press on the first contact face 34 of the release part, thereby causing the release part 32 to rotate about the shaft 38. The second contact face 36 of the release part is hereby caused to affect the contact face 44 of the first link arm. When the force by which the pedal arm 26 is operated reaches a sufficient size, the link arms 10, 12 are moved beyond their dead centre, and the brake is released. After completed operation, the pedal arm 26 is again returned to its protected starting position by a spring or the like.

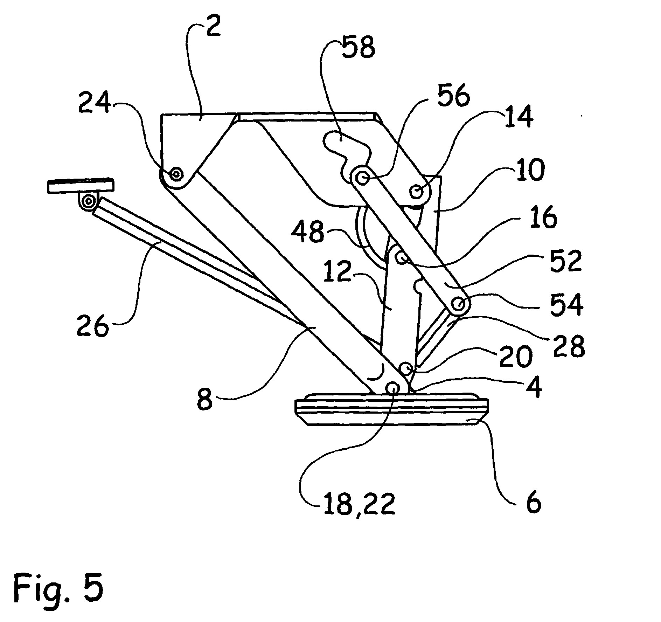

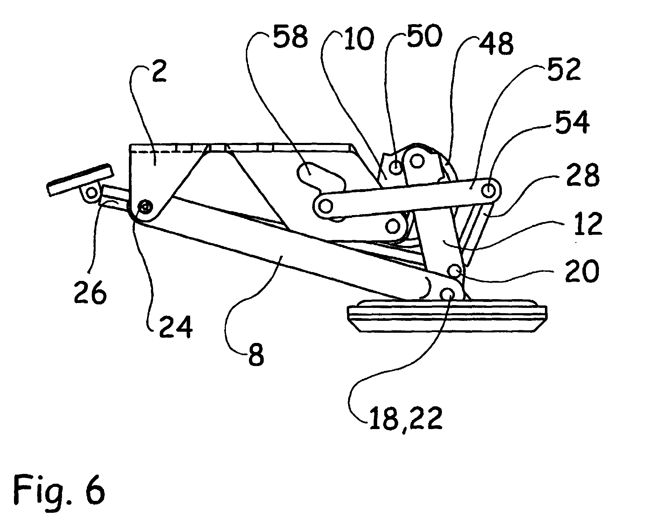

Fig. 5 shows an alternative embodiment in a passive position, where the top part 2 and the base part 4 are in principle connected as described above, but the first link arm 10 is here constructed as a fixed connection with an incorporated curved spring 48, which contributes to ensuring optimum braking. This alternative embodiment moreover has the distinction from the one described above that, in its locked position, it rests on means 50 which are arranged in connection with the first link arm 10 and the second link arm 12. Furthermore, in this embodiment there is a connecting rod 52 between the locking means 28 of the pedal arm 26 and the top part 2 of the brake. The connecting rod 52 is secured on the locking means 28 of the pedal arm by a hinge function 54, and it is likewise secured on the top part 2 by a hinge function 56. In this variant, the brake is provided with a groove 58 in the top part 2 so that the hinge point is variable. This connecting rod 52 ensures an optimum low building height, as will also appear from fig. 6.

Fig. 6, like fig. 5, shows an alternative embodiment of the brake in its passive position. As will also appear from fig. 5, this embodiment has a very low building height in the passive state.

## Claims

1. A brake, primarily for internal transport devices provided with wheels, such as a box trolley, a mail container, comprising a top part (2) which is fixedly mountable on the underside of the transport device, and a base part (4) which is provided with a brake shoe (6) at the bottom, said top part (2) and said base part (4) being connected via a support device (8), **characterized in** that a first link arm (10) is connected with the top part (2) by means of a first hinge function (14), wherein the first link arm (10) is connected with a second link arm (12) by a second hinge function (16), wherein the second link arm (12) is connected with the base part (4) by a third hinge function (18), wherein a pedal arm (26) is connected with the second link arm (12), wherein the pedal arm (26) is constructed to affect a toggle link which consists of the first link arm (10), the second hinge function (16) and the second link arm (12), and wherein the brake has means for locking as well as means for releasing the brake.

2. A brake according to claim 1, **characterized in** that the pedal arm (26) is connected with the second link arm (12) via a fourth hinge function (20), wherein the pedal arm (26) is formed with means (28, 30) for affecting a toggle link, and wherein the brake has means (28) for locking as well as means (30, 32) for releasing the brake.

3. A brake according to claims 1 and 2, **characterized in** that the third hinge function (18) and the fourth hinge function (20) are constructed with a common axis about which the second link arm (12) and the pedal arm (26) may be moved separately.

4. A brake according to claims 1-3, **characterized in** that the brake is locked by activation of the pedal (26), whereby the locking means (28) of the pedal arm press against an engagement face (34) on the second link arm (12) and thereby cause the toggle link to assume a locked position.

5. A brake according to claims 1-3, **characterized in** that the brake is released by activation of the pedal (26), whereby the release means (30) of the pedal arm activate a release mechanism (32, 38, 40) mounted in connection with the second link arm (12).

6. A brake according to claim 5, **characterized in** that the release mechanism (32, 38, 40) consists of a release part (32) which, when the brake has been activated and the pedal arm (26) has been returned to the starting position, is moved forwards and is thereby positioned in front of the release means (30) of the pedal arm.

7. A brake according to claims 1-6, **characterized in** that the first link arm (10) has a contact face (44) which is in immediate connection with the second contact face (36) of the release part (32) when the brake is activated, wherein the release part (32), upon activation of the pedal arm (26), is rotated about a shaft (38) and thereby, via a first contact face (34), cooperates with a contact face (42) on the release means (30) of the pedal arm (26), thereby releasing the brake.

8. A brake according to one of claims 1-7, **characterized in** that the base part (4) is connected with a support arm (8) through a fifth hinge function (22), wherein the support arm (8) is connected with the top part (2) via a sixth hinge function (24).

9. A brake according to claim 8, **characterized in** that the third (18) and the fifth (22) hinge functions are constructed with a common shaft about which the hinge functions may be moved separately.

10. A brake according to claims 1-9, **characterized in** that the pedal arm (26) returns to its starting position after activation.

11. A brake according to claim 1, **characterized in** that the third hinge function (18) is a roller which establishes a connection between the second link arm (12) and the base part (4).

12. A brake according to one of claims 1-11, **characterized in** that the support arm (8) is connected with the second link arm (12) via a fifth hinge function (22), wherein the support arm (8) is connected with the top part (2) via a sixth hinge function (24).

13. A brake according to one of claims 1-12, **characterized in** that the brake has a connecting rod (52) between the locking means (28) of the pedal arm and the top part (2) of the brake.
